# EUROPEAN PATENT APPLICATION

(11) **EP 4 580 183 A1**
(43) Date of publication of application: **02.07.2025**
(21) Application number: 23862001.7
(22) Date of filing: 28.06.2023
(51) Int. Cl.: H04N 19/146, H04N 19/70

(54) **METHODS AND APPARATUSES FOR CODING AND DECODING**

(30) Priority: 08.09.2022 CN 202211097579; 28.12.2022 CN 202211698950
(71) Applicant: Huawei Technologies Co., Ltd., Shenzhen, Guangdong 518129 (CN)
(72) Inventor: LUO, Yi, Shenzhen, Guangdong 518129 (CN); YANG, Haitao, Shenzhen, Guangdong 518129 (CN); FENG, Junkai, Shenzhen, Guangdong 518129 (CN); WANG, Danni, Shenzhen, Guangdong 518129 (CN)
(74) Representative: Maiwald GmbH
(86) International application number: PCT/CN2023/103257
(87) International publication number: WO 2024/051300

(57) **Abstract**

An encoding method and apparatus, and a decoding method and apparatus are disclosed, and relate to the field of video coding technologies. A decoding device may decode a coding unit based on a number of coded bits corresponding to the coding unit and a number of estimated bits indicating substream header bits corresponding to a plurality of substreams. This avoids a problem that accuracy of rate control is affected because an error occurs when a rate control module performs rate control only based on the number of coded bits corresponding to the coding unit, and helps improve video decoding quality. In addition, because the decoding device considers a number of bits occupied by the substream header bits, the substream header bits are also considered in a video decoding process. This avoids a problem that a QP value is excessively small because the substream header bits are not considered by the rate control module, and helps improve image quality of video content obtained by parsing a bitstream by the decoding device.

## Description

This application claims priorities to Chinese Patent Application No. 202211097579.9, filed with the China National Intellectual Property Administration on September 8, 2022 and entitled "ENCODING METHOD AND DECODING METHOD"; to Chinese Patent Application No. 202211698950.7, filed with the China National Intellectual Property Administration on December 28, 2022 and entitled "ENCODING METHOD AND APPARATUS, AND DECODING METHOD AND APPARATUS", both of which are incorporated herein by reference in their entireties.

### TECHNICAL FIELD

This application relates to the field of video coding technologies, and in particular, to an encoding method and apparatus, and a decoding method and apparatus.

### BACKGROUND

A video is a sequence including a plurality of consecutive frames of images, and one frame corresponds to one image. Because the plurality of consecutive frames are highly similar, to facilitate storage and transmission, coding-based compression is performed on the video. In a video coding process, a plurality of entropy encoders interleave a plurality of substreams corresponding to coding units corresponding to an image, to obtain a bit stream (or bitstream) corresponding to the coding units. A rate control module uses a number of coded bits of data content corresponding to the coding unit as an input, to implement rate control in video coding. However, data packets corresponding to different substreams have substream header bits corresponding to the substreams. As a result, an error occurs when the rate control module performs rate control only based on the number of coded bits corresponding to the coding unit, accuracy of rate control is affected, and quality of video coding is low. Therefore, how to provide a more effective encoding method and a more effective decoding method becomes an urgent problem to be resolved currently.

### SUMMARY

This application provides an encoding method and apparatus, and a decoding method and apparatus, to resolve a problem that accuracy of rate control is affected, and quality of video coding is low because an error occurs when a rate control module performs rate control based on only a number of coded bits corresponding to a coding unit.

According to a first aspect, an embodiment of this application provides an encoding method. The encoding method is applied to a video coding system. For example, the encoding method is performed by an encoding device included in the video coding system. The encoding method includes: The encoding device obtains at least one substream of a coding unit of a to-be-encoded image, and performs entropy encoding on the at least one substream to obtain a first number of bits. Further, the encoding device encodes the at least one substream based on the first number of bits to output a bitstream of the coding unit. The first number of bits includes a number of coded bits and a number of estimated bits. The number of coded bits indicates a number of bits occupied by data subject content included in the at least one substream, and the number of estimated bits indicates a substream header bit of each substream in the at least one substream.

In this embodiment, the encoding device may encode the coding unit based on the number of coded bits corresponding to the coding unit and the number of estimated bits indicating substream header bits corresponding to a plurality of substreams. This avoids a problem that accuracy of rate control is affected because an error occurs when a rate control module performs rate control based on only the number of coded bits corresponding to the coding unit, and helps improve video coding quality. In addition, because the encoding device considers a number of bits occupied by the substream header bits, the substream header bits are also considered in a video coding process. This avoids a problem that a quantization parameter (quantization parameter, QP) value is excessively small because the substream header bits are not considered by the rate control module, and helps improve a bit rate of video coding and improve image quality corresponding to video content in the bitstream.

For example, a substream segment corresponding to each substream includes a substream segment data subject and a substream index of each substream. The substream segment data subject refers to data subject content carried in the substream segment, and the substream index refers to a substream header bit carried in the substream segment. In some optional examples, the substream segment is also referred to as a data packet corresponding to a substream, and the data packet carries data subject content and a substream header bit.

In an optional implementation, that the encoding device performs entropy encoding on the at least one substream to obtain a first number of bits includes: The encoding device performs entropy encoding on the at least one substream to obtain the number of coded bits; and for a substream segment corresponding to each substream in the at least one substream, the encoding device estimates a substream header bit number of each substream, and determines the number of estimated bits based on at least one substream header bit number corresponding to the at least one substream. Further, the encoding device obtains the first number of bits based on the number of coded bits and the number of estimated bits.

In this embodiment, the encoding device separately obtains the number of coded bits and the number of estimated bits in the first number of bits. The number of estimated bits does not merely indicate a substream header bit corresponding to a substream, and substream header bits of all substreams corresponding to the coding unit are considered. This further avoids a problem that the QP value is excessively small because the substream header bits are not considered by the code rate control module, and helps improve a bit rate of video coding and improve image quality corresponding to video content in the bitstream.

In an optional implementation, that the encoding device estimates a substream header bit number of each substream includes: The encoding device obtains, based on a number of coded bits of a first historical substream in a historical coding unit, a first number of substream segments before a first substream is encoded. The first substream is a substream corresponding to the first historical substream in the at least one substream. In addition, the encoding device updates a substream header bit number of the first substream based on the first number and a substream index length of a substream segment corresponding to the first substream.

In this embodiment, the encoding device determines, based on the number of coded bits of the first historical substream in the historical coding unit, the first number of substream segments before the first substream is encoded, to update the number of substream header bits included in the first substream. This helps avoid a problem that the number of substream header bits is incorrectly estimated, improve accuracy of the first number of bits, improve accuracy of QP decision based on the first number of bits, and improve quality of video coding based on the QP value obtained through decision.

In an optional implementation, that the encoding device updates a substream header bit number of the first substream based on the first number and a substream index length of a substream segment corresponding to the first substream includes: The encoding device obtains a second number based on a number of coded bits of the first substream, and obtains a difference between the second number and the first number. The second number indicates a second number of encoded substream segments corresponding to the first substream, and the second number not only includes a number of substream segments in the first historical substream, but also includes a number of substream segments corresponding to the first substream in the to-be-encoded unit. In addition, the encoding device updates the substream header bit number of the first substream based on the difference and the substream index length of the substream segment corresponding to the first substream.

For example, the encoding device not only considers a substream header bit of a historical substream in the historical coding unit, but also considers the number of substream segments before the first substream in the coding unit is encoded, so that an input bit number (for example, the first number of bits) required for QP value decision is more accurate. This helps improve video coding quality.

In an optional implementation, the encoding device includes at least one encoding substream buffer. The at least one encoding substream buffer includes a first buffer, and the first buffer is configured to temporarily store a substream segment corresponding to the first historical substream and the substream segment corresponding to the first substream. The encoding method provided in this embodiment of this application further includes: The encoding device updates, based on the second number, a number of substream segments stored in the first buffer.

In this embodiment, each time the encoding device updates the number of substream header bits, the encoding device updates a number of encoded data packets in the encoding substream buffer. Therefore, in a process in which the encoding device encodes an undecoded substream segment in the encoding substream buffer, the encoding device updates substream header bits corresponding to the substream. This improves accuracy of the first number of bits required for QP decision, and helps improve video coding quality.

In an optional example, if the substream segment includes only the substream segment data subject and the substream index, the foregoing number of estimated bits may be a sum of at least one substream header bit number corresponding to the coding unit. When the substream segment corresponding to the substream includes data subject content and a substream header bit corresponding to the substream, the number of coded bits indicates the data content, and the number of estimated bits indicates the substream header bit (substream index). Therefore, a problem that the QP value is excessively small because the substream header bits are not considered by the rate control module is avoided, and a bit rate of video coding and image quality corresponding to video content in the bitstream are improved.

In an optional implementation, the substream segment corresponding to each substream in the at least one substream further includes a preset flag bit, and the number of estimated bits further indicates the flag bit. The flag bit herein may be used to implement a user-defined function required by a user, or provide an encryption function required by video coding for a developer, or implement another optional function, or the like.

In this embodiment, the encoding device may further consider another preset flag bit in the number of estimated bits. The flag bit may be used to implement a specific function required by the user. In addition, in a video coding process, the flag bit is also used as an input of the rate control module by the encoding device. This improves accuracy of QP value decision and further improves video coding quality.

In an optional implementation, that the encoding device encodes the at least one substream based on the first number of bits to output a bitstream of the coding unit includes: The encoding device determines the QP value of the coding unit based on the first number of bits, and encodes the at least one substream based on the QP value to output the bitstream of the coding unit. In this embodiment, the first number of bits includes not only the number of coded bits indicating the data content, but also the number of estimated bits indicating the substream header bit. When the encoding device performs QP decision based on the first number of bits, a problem that the QP value is excessively small because the substream header bits are not considered by the rate control module is avoided. This improves a bit rate of video coding and improves image quality corresponding to video content in the bitstream.

In an optional implementation, that the encoding device outputs a bitstream of the coding unit includes: The encoding device sends the bitstream corresponding to the coding unit. For example, the encoding device sends the bitstream to a storage device included in the video coding system, or the encoding device sends the bitstream to a decoding device included in the video coding system. Because the encoding device considers the substream header bits of the plurality of substreams when generating the bitstream corresponding to the coding unit, these substream header bits are also considered for the QP value required for encoding. This avoids a problem of image quality deterioration caused by an excessively small QP value, and helps improve video coding quality.

According to a second aspect, an embodiment of this application further provides a decoding method. The decoding method is applied to a video coding system. For example, the decoding method is performed by a decoding device included in the video coding system. The decoding method includes: The decoding device obtains, based on a bitstream, at least one substream corresponding to a coding unit, and performs entropy decoding on the at least one substream to obtain a first number of bits. Further, the decoding device decodes the at least one substream based on the first number of bits to output a reconstructed image of the coding unit. The first number of bits includes a number of coded bits and a number of estimated bits. The number of coded bits indicates a number of bits occupied by data subject content included in the at least one substream, and the number of estimated bits indicates a substream header bit of each substream in the at least one substream.

In this embodiment, the decoding device may decode the coding unit based on the number of coded bits corresponding to the coding unit and the number of estimated bits indicating substream header bits corresponding to a plurality of substreams. This avoids a problem that accuracy of rate control is affected because an error occurs when a rate control module performs rate control based on only the number of coded bits corresponding to the coding unit, and helps improve video decoding quality. In addition, because the decoding device considers a number of bits occupied by the substream header bits, the substream header bits are also considered in a video decoding process. This avoids a problem that a QP value is excessively small because the substream header bits are not considered by the rate control module, and helps improve image quality of video content obtained by parsing the bitstream by the decoding device.

For example, a substream segment corresponding to each substream includes a substream segment data subject and a substream index of each substream.

In an optional implementation, that the decoding device performs entropy decoding on the at least one substream to obtain a first number of bits includes: The decoding device performs entropy decoding on the at least one substream to obtain the number of coded bits. In addition, for a substream segment corresponding to each substream in the at least one substream, the decoding device estimates a substream header bit number of each substream, and determines the number of estimated bits based on at least one substream header bit number corresponding to the at least one substream. Further, the decoding device obtains the first number of bits based on the number of coded bits and the number of estimated bits.

In an optional implementation, that the decoding device estimates a substream header bit number of each substream includes: The decoding device obtains, based on a number of coded bits of a first historical substream in a historical coding unit, a first number of substream segments before a first substream is decoded; and the decoding device updates a substream header bit number of the first substream based on the first number and a substream index length of a substream segment corresponding to the first substream. The first substream is a substream corresponding to the first historical substream in the at least one substream of the to-be-encoded coding unit.

In an optional implementation, that the decoding device updates a substream header bit number of the first substream based on the first number and a substream index length of a substream segment corresponding to the first substream includes: The decoding device obtains a second number based on a number of coded bits of the first substream, and obtains a difference between the second number and the first number. The second number indicates a second number of undecoded substream segments corresponding to the first substream. Further, the decoding device updates the substream header bit number of the first substream based on the difference and the substream index length of the substream segment corresponding to the first substream.

In an optional implementation, the decoding device includes at least one decoding substream buffer. The at least one decoding substream buffer includes a first buffer, and the first buffer is configured to temporarily store a substream segment corresponding to the first historical substream and the substream segment corresponding to the first substream. The decoding method provided in this embodiment of this application further includes: The decoding device updates, based on the second number, a number of substream segments stored in the first buffer.

In a feasible case, the number of estimated bits is a sum of at least one substream header bit number corresponding to the at least one substream of the to-be-encoded unit.

In an optional implementation, a substream segment corresponding to each substream in the at least one substream further includes a preset flag bit, and the number of estimated bits further indicates the flag bit.

In an optional implementation, that the decoding device decodes the at least one substream based on the first number of bits to output a reconstructed image of the coding unit includes: The decoding device determines a QP value of the coding unit based on the first number of bits, and decodes the at least one substream based on the QP value to output the reconstructed image corresponding to the coding unit.

In an optional implementation, that the decoding device outputs a reconstructed image corresponding to the coding unit includes: The decoding device displays the reconstructed image corresponding to the coding unit. The decoding device may display one or more frames of images, to view image information carried in the bitstream. This facilitates display of video content and the like.

According to a third aspect, an embodiment of this application provides an encoding apparatus. The encoding apparatus includes a module configured to implement the encoding method provided in any implementation of the first aspect. For example, the encoding apparatus includes an obtaining module, a bit number determining module, and an encoding module. The obtaining module is configured to obtain at least one substream of a coding unit of a to-be-encoded image. The bit number determining module is configured to perform entropy encoding on the at least one substream to obtain a first number of bits. The first number of bits includes a number of coded bits and a number of estimated bits. The number of coded bits indicates a number of bits occupied by data subject content included in the at least one substream, and the number of estimated bits indicates a substream header bit of each substream in the at least one substream. The encoding module is configured to encode the at least one substream based on the first number of bits to output a bitstream of the coding unit.

In an optional implementation, the bit number determining module is specifically configured to: perform entropy encoding on the at least one substream to obtain the number of coded bits; for a substream segment corresponding to each substream in the at least one substream, estimate a substream header bit number of each substream, and determine the number of estimated bits based on at least one substream header bit number corresponding to the at least one substream; and obtain the first number of bits based on the number of coded bits and the number of estimated bits.

In an optional implementation, the bit number determining module is specifically configured to: obtain, based on a number of coded bits of a first historical substream in a historical coding unit, a first number of substream segments before a first substream is encoded, where the first substream is a substream corresponding to the first historical substream in the at least one substream; and update a substream header bit number of the first substream based on the first number and a substream index length of a substream segment corresponding to the first substream.

In an optional implementation, the bit number determining module is specifically configured to: obtain a second number based on a number of coded bits of the first substream, and obtain a difference between the second number and the first number; and update the substream header bit number of the first substream based on the difference and the substream index length of the substream segment corresponding to the first substream. The second number indicates a second number of encoded substream segments corresponding to the first substream.

In an optional implementation, the encoding device includes at least one encoding substream buffer. The at least one encoding substream buffer includes a first buffer, and the first buffer is configured to temporarily store a substream segment corresponding to the first historical substream and the substream segment corresponding to the first substream. The encoding apparatus provided in this embodiment of this application further includes an update module, configured to update, based on the second number, a number of substream segments stored in the first buffer.

In an optional implementation, the substream segment corresponding to each substream includes a substream segment data subject and a substream index of each substream.

In an optional implementation, the number of estimated bits is a sum of at least one substream header bit number.

In an optional implementation, a substream segment corresponding to each substream in the at least one substream further includes a preset flag bit, and the number of estimated bits further indicates the flag bit.

In an optional implementation, the encoding module is specifically configured to: determine a QP value of the coding unit based on the first number of bits; and encode the at least one substream based on the QP value to output the bitstream of the coding unit.

In an optional implementation, the encoding module is specifically configured to send the bitstream of the coding unit.

According to a fourth aspect, an embodiment of this application provides a decoding apparatus. The decoding apparatus includes units configured to implement the decoding method provided in any implementation of the second aspect. For example, the decoding apparatus includes an obtaining unit, a bit number determining unit, and a decoding unit. The obtaining unit is configured to obtain, based on a bitstream, at least one substream corresponding to a coding unit. The bit number determining unit is configured to perform entropy decoding on the at least one substream to obtain a first number of bits. The first number of bits includes a number of coded bits and a number of estimated bits. The number of coded bits indicates a number of bits occupied by data subject content included in the at least one substream, and the number of estimated bits indicates a substream header bit of each substream in the at least one substream. The decoding unit is configured to decode the at least one substream based on the first number of bits to output a reconstructed image of the coding unit.

In an optional implementation, the bit number determining unit is specifically configured to: perform entropy decoding on the at least one substream to obtain the number of coded bits; and for a substream segment corresponding to each substream in the at least one substream, estimate a substream header bit number of each substream, and determine the number of estimated bits based on at least one substream header bit number corresponding to the at least one substream. In addition, the bit number determining unit is further specifically configured to obtain the first number of bits based on the number of coded bits and the number of estimated bits.

In an optional implementation, the bit number determining unit is specifically configured to: obtain, based on a number of coded bits of a first historical substream in a historical coding unit, a first number of substream segments before a first substream is decoded; and update a substream header bit number of the first substream based on the first number and a substream index length of a substream segment corresponding to the first substream. The first substream is a substream corresponding to the first historical substream in the at least one substream.

In an optional implementation, the bit number determining unit is specifically configured to: obtain a second number based on a number of coded bits of the first substream, and obtain a difference between the second number and the first number. The second number indicates a second number of undecoded substream segments corresponding to the first substream. In addition, the bit number determining unit is further specifically configured to update the substream header bit number of the first substream based on the difference and the substream index length of the substream segment corresponding to the first substream.

In an optional implementation, the decoding device includes at least one decoding substream buffer. The at least one decoding substream buffer includes a first buffer, and the first buffer is configured to temporarily store a substream segment corresponding to the first historical substream and the substream segment corresponding to the first substream. The decoding apparatus provided in this embodiment of this application further includes an updating unit, configured to update, based on the second number, a number of substream segments stored in the first buffer.

In an optional implementation, the substream segment corresponding to each substream includes a substream segment data subject and a substream index of each substream.

In an optional implementation, the number of estimated bits is a sum of at least one substream header bit number.

In an optional implementation, a substream segment corresponding to each substream in the at least one substream further includes a preset flag bit, and the number of estimated bits further indicates the flag bit.

In an optional implementation, the coding unit is specifically configured to: determine a QP value of the coding unit based on the first number of bits, and decode the at least one substream based on the QP value to output the reconstructed image corresponding to the coding unit.

In an optional implementation, the decoding apparatus may include a display unit, and the display unit is configured to display the reconstructed image corresponding to the coding unit.

According to a fifth aspect, an embodiment of this application provides an electronic device, including a processor and an interface circuit. The interface circuit is configured to receive a signal from a device other than the electronic device and transmit the signal to the processor, or send a signal from the processor to a device other than the electronic device. The processor is configured to implement, through a logic circuit or by executing code instructions, the method according to any implementation of the first aspect or the method according to any implementation of the second aspect.

For example, the electronic device is an encoding device or a decoding device.

According to a sixth aspect, an embodiment of this application provides a coding system, including an encoding device and a decoding device. The encoding device is communicatively connected to the decoding device, the decoding device is configured to implement the method according to any implementation of the second aspect, and the encoding device is configured to implement the method according to any implementation of the first aspect.

According to a seventh aspect, an embodiment of this application provides a computer-readable storage medium. The storage medium stores a computer program or instructions, and the computer program or the instructions are executed by an electronic device, to implement the method according to any implementation of the first aspect, or implement the method according to any implementation of the second aspect.

According to an eighth aspect, an embodiment of this application provides a computer program product. The computer program product includes instructions. When the computer program product runs on an encoding device or a decoding device, the encoding device or the decoding device executes the instructions, to implement the operation steps of the method in any one of the foregoing aspects or the possible implementations of any one of the foregoing aspects.

For beneficial effect of the second aspect to the eighth aspect, refer to the content in any implementation of the first aspect. Details are not described herein again. In this application, the implementations provided in the foregoing aspects may be further combined to provide more implementations.

### BRIEF DESCRIPTION OF DRAWINGS

FIG. 1 is a diagram of a video transmission system according to an embodiment of this application;
FIG. 2 is a diagram of a video coding system according to an embodiment of this application;
FIG. 3 is a schematic flowchart 1 of an encoding method according to an embodiment of this application;
FIG. 4 is a schematic flowchart 2 of an encoding method according to an embodiment of this application;
FIG. 5 is a schematic flowchart 3 of an encoding method according to an embodiment of this application;
FIG. 6 is a schematic flowchart 4 of an encoding method according to an embodiment of this application;
FIG. 7 is a diagram of two counters according to an embodiment of this application;
FIG. 8 is a schematic flowchart of an image decoding method according to an embodiment of this application;
FIG. 9 is a diagram of a structure of an encoding apparatus according to an embodiment of this application;
FIG. 10 is a diagram of a structure of a decoding apparatus according to an embodiment of this application; and
FIG. 11 is a diagram of a structure of an electronic device according to an embodiment of this application.

### DESCRIPTION OF EMBODIMENTS

Embodiments of this application provide an encoding method. An encoding device may encode a coding unit based on a number of coded bits corresponding to the coding unit and a number of estimated bits indicating substream header bits corresponding to a plurality of substreams. This avoids a problem that accuracy of rate control is affected because an error occurs when a rate control module performs rate control based on only the number of coded bits corresponding to the coding unit, and helps improve video coding quality. In addition, because the encoding device considers the number of bits occupied by the substream header bits, the substream header bits are also considered in a video coding process. This avoids a problem that a quantization parameter (quantization parameter, QP) value is excessively small because the substream header bits are not considered by the rate control module, and helps improve a bit rate of video coding and improve image quality corresponding to video content in a bitstream.

Correspondingly, embodiments of this application further provides a decoding method. A decoding device may decode the bitstream output by the encoding device, to achieve beneficial effect similar to that on an encoding side. For example, the decoding device considers the number of bits occupied by the substream header bits, so that the substream header bits are also considered in a video decoding process. This avoids a problem that a QP value is excessively small because the substream header bits are not considered by the rate control module, and helps improve image quality of video content obtained by parsing the bitstream by the decoding device.

To make descriptions of the following embodiments clear and concise, related technologies are first described.

Interface compression: A media device uses a display interface to transmit an image and a video. Compression and decompression operations are performed on data of the image and the video that are transmitted through the display interface. This is referred to as interface compression for short.

A bit stream is a binary stream generated after an image or a video is encoded. In some cases, the bit stream is also referred to as a bitstream.

A syntax element is data obtained after typical encoding operations such as prediction and transformation are performed on an image block, and the syntax element is main input content of an entropy encoding module.

An entropy encoder is an encoder module that converts an input syntax element into a bit stream.

A substream (substream) is a part of a bit stream. Bit streams output by a same entropy encoder are defined as a same substream.

A substream segment (substream segment) is a basic unit of substream interleaving, and a segment of data with a fixed length of N bits. The substream segment includes a substream segment data subject (substream_segment_data) and a substream index (substream_index). The substream segment data subject is data subject content carried in a substream segment, and the substream index is a substream header bit carried in the substream segment. In some optional examples, the substream segment is also referred to as a data packet corresponding to a substream, and the data packet carries data subject content and a substream header bit.

For example, a length of a substream segment is related to a bit depth and an image format, and includes a 2-bit (bit) substream index value (indicates a substream to which a current substream segment belongs) and a 512-bit substream segment data subject.

Substream interleaving is an operation of combining a plurality of substreams into a bit stream, and is also referred to as multiplexing (multiplexing). In some cases, interleaving of a plurality of substreams is also referred to as combination of the plurality of substreams.

Substream de-interleaving is an operation of splitting different substreams from a bit stream, and is also referred to as demultiplexing (demultiplexing). In some cases, de-interleaving of a plurality of substreams is also referred to as substream reassembly of the plurality of substreams.

An encoding substream buffer is a first in first out (first in first out, FIFO) buffer. Each substream has a one-to-one corresponding encoding substream buffer. The encoding substream buffer stores data of a corresponding substream generated after entropy encoding (for example, a substream segment data subject other than a substream index in a substream segment).

A decoding substream buffer is an FIFO buffer. Each substream has a one-to-one corresponding decoding substream buffer, and the decoding substream buffer stores data of each substream after substream de-interleaving is performed on a bit stream.

Substream header bit: A substream fragment indicates a bit length occupied by header information of a substream to which the substream fragment belongs.

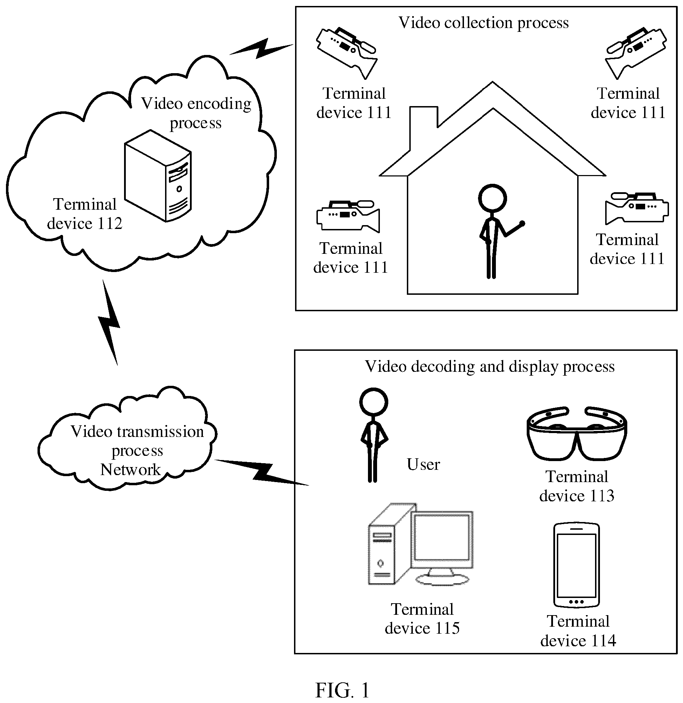

FIG. 1 is a diagram of a video transmission system according to an embodiment of this application. A video processing process includes video collection, video encoding, video transmission, and video decoding and display processes. The video transmission system includes a plurality of terminal devices (such as a terminal device 111 to a terminal device 115 shown in FIG. 1) and a network. The network may implement a video transmission function. The network may include one or more network devices. The network device may be a router, a switch, or the like.

The terminal device shown in FIG. 1 may be, but is not limited to, user equipment (user equipment, UE), a mobile station (mobile station, MS), a mobile terminal (mobile terminal, MT), and the like. The terminal device may be a mobile phone (for example, the terminal device 114 shown in FIG. 1), a tablet computer, a computer with a wireless transceiver function (for example, the terminal device 115 shown in FIG. 1), a virtual reality (Virtual Reality, VR) terminal device (for example, the terminal device 113 shown in FIG. 1), an augmented reality (Augmented Reality, AR) terminal device, a wireless terminal in industrial control (industrial control), a wireless terminal in self-driving (self-driving), a wireless terminal in a smart city (smart city), a wireless terminal in a smart home (smart home), and the like.

As shown in FIG. 1, in different video processing processes, terminal devices are different. For example, in the video collection process, the terminal device 111 may be a camera apparatus (for example, a video camera or a camera) used for road surveillance, or a mobile phone, a tablet computer, or an intelligent wearable device that has a video collection function. For another example, in the video encoding process, the terminal device 112 may be a server, or may be a data center. The data center may include one or more physical devices having an encoding function, for example, a server, a mobile phone, a tablet computer, or another encoding device. For still another example, in the video decoding and display process, the terminal device 113 may be VR glasses, and a user may control a viewing angle range through turning; the terminal device 114 may be a mobile phone, and the user may control a viewing angle range on the mobile phone 114 through a touch operation, an air gesture operation, or the like; and the terminal device 115 may be a personal computer, and the user may control a viewing angle range displayed on a display screen via an input device like a mouse or a keyboard.

It may be understood that a video is a general term, the video is a sequence including a plurality of consecutive frames of images, and one frame corresponds to one image. For example, a panoramic video may be a 360° video, or may be a 180° video. In some possible cases, the panoramic video may alternatively be a "large" range video that exceeds a viewing angle range (110° to 120°) of a human eye, for example, a 270° video.

FIG. 1 is merely a diagram. The video transmission system may further include another device that is not shown in FIG. 1. A number and types of terminal devices included in the system are not limited in embodiments of this application.

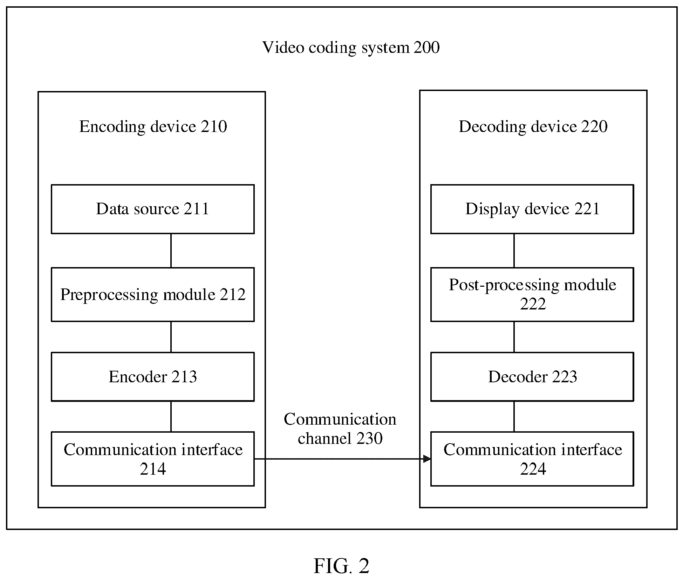

Based on the video transmission system shown in FIG. 1, FIG. 2 is a diagram of a video coding system according to an embodiment of this application. The video coding system 200 includes an encoding device 210 and a decoding device 220. The encoding device 210 establishes a communication connection to the decoding device 220 through a communication channel 230.

The encoding device 210 may implement a video encoding function. As shown in FIG. 1, the encoding device 210 may be the terminal device 112, or the encoding device 210 may be a data center having a video encoding capability. For example, the data center includes a plurality of servers.

The encoding device 210 may include a data source 211, a preprocessing module 212, an encoder 213, and a communication interface 214.

The data source 211 may include or may be any type of electronic device configured to collect a video, and/or any type of source video generation device, for example, a computer graphics processor configured to generate a computer animation scene or any type of device configured to obtain and/or provide a source video, and a computer-generated source video. The data source 211 may be any type of internal memory or memory that stores the source video. The source video may include a plurality of video streams or images collected by a plurality of video collection apparatuses (like video cameras).

The preprocessing module 212 is configured to receive the source video, and preprocess the source video to obtain a panoramic video or a plurality of frames of images. For example, preprocessing performed by the preprocessing module 212 may include color format conversion (for example, conversion from RGB to YCbCr), octree structuring, and video stitching.

The encoder 213 is configured to receive a video or an image, and encode the videoor the image to obtain encoded data. For example, the encoder 213 encodes the video to obtain a basic layer code stream and an enhancement layer code stream. In some optional cases, a code stream obtained through encoding may also be referred to as a bitstream, a bit stream, or the like.

The communication interface 214 in the encoding device 210 may be configured to receive the encoded data and send the encoded data (or a version of the encoded data obtained through any other processing) to another device, for example, the decoding device 220, or any other device, through the communication channel 230 for storage, display, direct reconstruction, or the like.

Optionally, the encoding device 210 includes a bitstream buffer, and the bitstream buffer is configured to store a bitstream corresponding to one or more coding units.

The decoding device 220 may implement a function of image decoding or video decoding. As shown in FIG. 1, the decoding device 220 may be any one of the terminal device 113 to the terminal device 115 shown in FIG. 1.

The decoding device 220 may include a display device 221, a post-processing module 222, a decoder 223, and a communication interface 224.

The communication interface 224 in the decoding device 220 is configured to receive encoded data (or a version of the encoded data obtained through any other processing) from the encoding device 210 or from any other encoding device like a storage device.

The communication interface 214 and the communication interface 224 may be configured to send or receive the encoded data through a direct communication link between the encoding device 210 and the decoding device 220, for example, through a direct wired or wireless connection, or via any type of network like a wired or wireless network or any combination thereof, or any type of private and public network, or any type of combination thereof.

The communication interface 224 corresponds to the communication interface 214, and may be configured to, for example, receive transmitted data, and process the transmitted data through any type of corresponding transmission decoding or processing and/or decapsulation to obtain the encoded data.

The communication interface 224 and the communication interface 214 each may be configured as a unidirectional communication interface indicated by an arrow, in FIG. 2, that corresponds to the communication channel 230 and that is directed from the encoding device 210 to the decoding device 220, or a bidirectional communication interface, and may be configured to: send/receive a message or the like to establish a connection, and determine and exchange any other information related to a communication link or data transmission like transmission of encoded compressed data, and the like.

The decoder 223 is configured to receive the encoded data, and decode the encoded data to obtain decoded data (an image, a video, or the like).

The post-processing module 222 is configured to perform post-processing on the decoded data obtained through decoding to obtain post-processed data (for example, a to-be-displayed image, a reconstructed image, or a decoded image). Post-processing performed by the post-processing module 222 may include, for example, color format conversion (for example, from YCbCr to RGB), octree reconstruction, video splitting and fusion, or any other processing for generating data for display, for example, by the display device 221.

The display device 221 is configured to receive the post-processed data for display to a user, a viewer, or the like. The display device 221 may be or include any type of display for representing the reconstructed image, for example, an integrated or external display screen or display. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS) display, a digital light processor (digital light processor, DLP), or any type of other display.

In an optional implementation, the encoding device 210 and the decoding device 220 may transmit the encoded data via a data forwarding device. For example, the data forwarding device may be a router or a switch.

The following describes implementations of embodiments of this application in detail with reference to accompanying drawings.

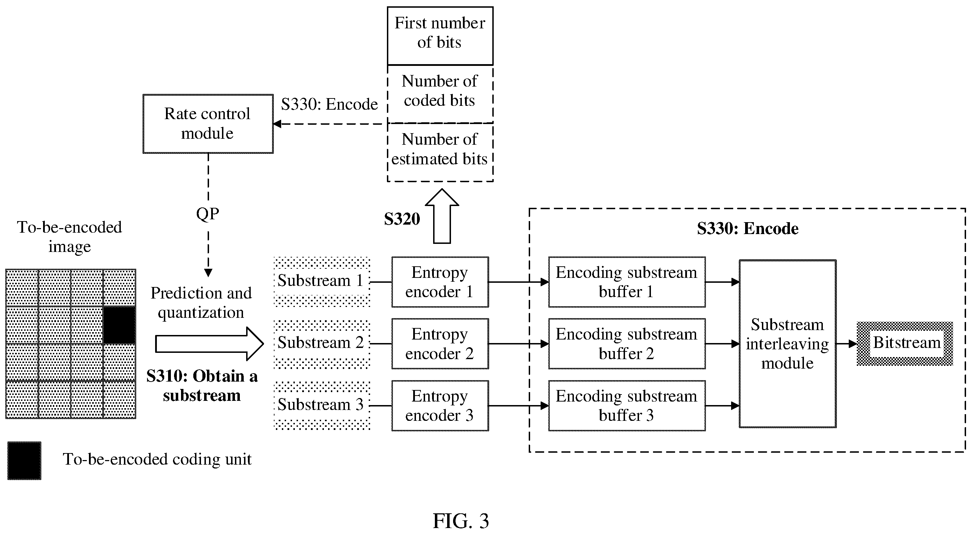

Herein, an example in which the image encoding method in this embodiment of this application is performed by the encoding device 210 shown in FIG. 2 is used for description. FIG. 3 is a schematic flowchart 1 of an image encoding method according to an embodiment of this application. The image encoding method includes the following steps S310 to S330.

S310: The encoding device obtains at least one substream of a coding unit of a to-be-encoded image.

As shown in FIG. 3, the to-be-encoded image may include one or more coding units.

In a first possible example, the to-be-encoded image includes one coding unit, and the coding unit includes all image regions of the to-be-encoded image.

In a second possible example, the to-be-encoded image includes a plurality of coding units, and one coding unit corresponds to one image sub-region (for example, a small black square in FIG. 3) of the to-be-encoded image.

It should be noted that one coding unit may correspond to one or more substreams.

In a possible case, one coding unit corresponds to one substream. For example, the coding unit has only a substream corresponding to a luminance component, for example, the substream is in a YUV400 format.

In another possible case, one coding unit corresponds to a plurality of substreams, for example, three substreams: a substream 1, a substream 2, and a substream 3. In some optional implementations, the substream 1 is also referred to as a first substream, the substream 2 is also referred to as a second substream, and the substream 3 is also referred to as a third substream. In this embodiment, the substream 1 is represented by Substream[0], the substream 2 is represented by Substream[1], and the substream 3 is represented by Substream[2].

For example, the substream 1 indicates a luminance component corresponding to the coding unit, and the substream 2 and the substream 3 indicate chrominance components corresponding to the coding unit. It should be noted that the foregoing examples and possible cases are merely examples provided in this embodiment, and should not be construed as a limitation on this application. For example, in some optional implementations, the substream 2 indicates the luminance component of the coding unit, and the substream 1 and the substream 3 indicate the chrominance component of the coding unit. This is not limited in this application.

In this embodiment, a substream segment corresponding to a substream is sent to an encoding substream buffer. For example, a substream segment corresponding to the substream 1 is stored in an encoding substream buffer 1, a substream segment corresponding to the substream 2 is stored in an encoding substream buffer 2, and a substream segment corresponding to the substream 3 is stored in an encoding substream buffer 3.

S320: The encoding device performs entropy encoding on the at least one substream to obtain a first number of bits.

The first number of bits includes a number of coded bits and a number of estimated bits. In some optional implementations, the first number of bits is also referred to as a total number of bits required in a rate control process of the coding unit.

The number of coded bits herein indicates a number of bits occupied by data subject content included in the at least one substream. For example, a substream segment corresponding to a substream includes a substream segment data subject and a substream index. For content of the substream segment data subject and the substream index, refer to the descriptions of the foregoing related technology. Details are not described herein again. For example, a number of coded bits of the at least one substream may include numbers of bits occupied by substream segment data subjects included in substream segments corresponding to all the substreams corresponding to the coding unit in S310.

The number of estimated bits indicates a substream header bit of each substream in the at least one substream. For example, the number of estimated bits includes numbers of substream header bits occupied by substream indexes included in substream segments corresponding to all the substreams corresponding to the coding unit in S310. In some possible cases, the number of estimated bits is a sum of the at least one substream header bit number.

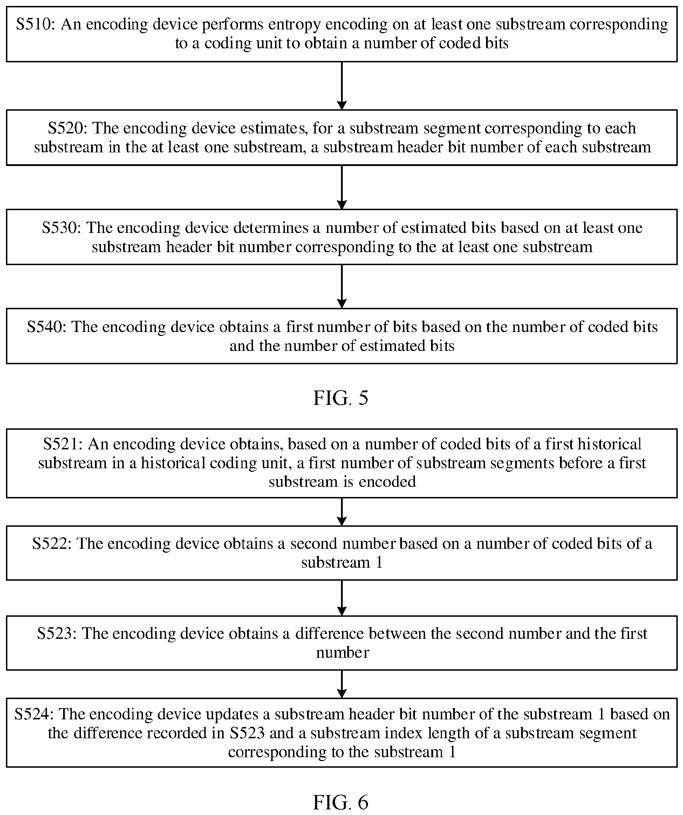

When a substream segment corresponding to a substream includes data subject content and a substream header bit corresponding to the substream, the number of coded bits indicates the data content, and the number of estimated bits indicates the substream header bit (substream index). Therefore, a problem that a QP value is excessively small because the substream header bits are not considered by a rate control module is avoided, and a bit rate of video coding and image quality corresponding to video content in a bitstream are improved. For a possible implementation in which the encoding device obtains the first number of bits, refer to related content in FIG. 5. Details are not described herein.

In an optional implementation, a substream segment corresponding to each substream in the at least one substream further includes a preset flag bit, and the number of estimated bits further indicates the flag bit. The flag bit herein may be used to implement a user-defined function required by a user, or provide an encryption function required by video coding for a developer, or implement another optional function, or the like.

In other words, the encoding device may further consider another preset flag bit in the number of estimated bits. The flag bit may be used to implement a specific function required by the user. In addition, in a video coding process, the flag bit is also used as an input of the rate control module by the encoding device. This improves accuracy of QP value decision and further improves video coding quality.

S330: The encoding device encodes, based on the first number of bits, the at least one substream corresponding to the coding unit to output a bitstream of the coding unit.

Optionally, the bitstream of the coding unit is also referred to as a bit stream, a code stream, a data stream, or the like corresponding to the coding unit. A name of the bitstream is not limited in this application.

For example, (a substream interleaving module in) the encoding device may interleave at least one encoded substream to output the bitstream. Encoding herein includes but is not limited to encoding operations such as entropy encoding, prediction, and quantization.

In an optional implementation, that the encoding device encodes, based on the first number of bits, the at least one substream to output a bitstream of the coding unit may include the following content: The encoding device determines the QP value of the coding unit based on the first number of bits, and encodes the at least one substream based on the QP value to output the bitstream of the coding unit. For example, the QP value herein is determined by the rate control module included in the encoding device.

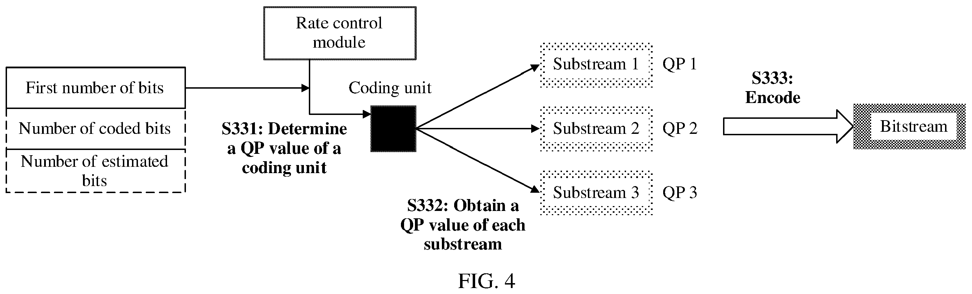

For a specific implementation of S330, this embodiment provides a possible example, as shown in FIG. 4. FIG. 4 is a schematic flowchart 2 of an encoding method according to an embodiment of this application. S330 may include the following steps S331 to S333.

S331: The encoding device determines the QP value of the coding unit based on the first number of bits.

The QP value of the coding unit herein is a QP value for all substreams included in the coding unit. However, in some possible cases, QP values of a plurality of substreams corresponding to the coding unit are slightly different.

S332: The encoding device obtains a QP value of each substream based on the QP value of the coding unit.

For example, the encoding device obtains two QP values: a QP 1 and a QP 2 based on the QP value of the coding unit. The QP 1 is a QP value to be used by the substream 1 for the luminance component of the coding unit, and the QP 2 is a QP value to be used by the substream 2 and the substream 3 for the chrominance component of the coding unit.

In some optional cases, for example, the coding unit corresponds to only the substream 1 having the luminance component, and the encoding device may directly apply the QP value of the coding unit to the substream 1, and perform quantization and prediction on the substream 1 based on the QP value, to implement encoding of the coding unit.

S333: The encoding device encodes, based on the QP value of each substream, all the substreams corresponding to the coding unit to output the bitstream of the coding unit.

In this embodiment, the first number of bits includes not only the number of coded bits indicating the data content, but also the number of estimated bits indicating the substream header bit. When the encoding device performs QP decision based on the first number of bits, a problem that the QP value is excessively small because the substream header bits are not considered by the rate control module is avoided. This improves a bit rate of video coding and improves image quality corresponding to video content in the bitstream.

For example, that the encoding device outputs the bitstream of the coding unit may include: The encoding device sends the bitstream to a storage device included in a video coding system. For example, the storage device refers to a memory included in a network in a video transmission process in FIG. 1, or a database that provides a storage function by a data center (data center, DC). Alternatively, that the encoding device outputs the bitstream of the coding unit may include: The encoding device sends the bitstream to a decoding device included in the video coding system. For example, the decoding device is any one of the terminal device 113 to the terminal device 115 shown in FIG. 1, or the decoding device is the decoding device 220 shown in FIG. 2.

Because the encoding device considers the substream header bits of the plurality of substreams when generating the bitstream corresponding to the coding unit, these substream header bits are also considered for the QP value required for encoding. This avoids a problem of image quality deterioration caused by an excessively small QP value, and helps improve video coding quality.

In this embodiment, the encoding device may encode the coding unit based on the number of coded bits corresponding to the coding unit and the number of estimated bits indicating the substream header bits corresponding to the plurality of substreams. This avoids a problem that accuracy of rate control is affected because an error occurs when the rate control module performs rate control based on only the number of coded bits corresponding to the coding unit, and helps improve video coding quality.

For a specific implementation in which the encoding device obtains the foregoing first number of bits, this embodiment provides a possible example, as shown in FIG. 5. FIG. 5 is a schematic flowchart 3 of an encoding method according to an embodiment of this application. That the encoding device obtains the first number of bits required by the coding unit for encoding may include the following steps S510 to S540.

S510: The encoding device performs entropy encoding on the at least one substream corresponding to the coding unit to obtain the number of coded bits.

For example, the number of coded bits is bits to be actually encoded by the encoding device for the coding unit. For more content of the number of coded bits, refer to the related description of S320. Details are not described herein again.

S520: The encoding device estimates, for the substream segment corresponding to each substream in the at least one substream, a substream header bit number of each substream.

For a process in which the encoding device estimates the substream header bit number of each substream, this embodiment provides a possible implementation, as shown in FIG. 6. FIG. 6 is a schematic flowchart 4 of an encoding method according to an embodiment of this application. The foregoing S520 may include the following steps S521 to S524.

S521: The encoding device obtains, based on a number of coded bits of a first historical substream in a historical coding unit, a first number of substream segments before a first substream is encoded.

The first substream is a substream corresponding to the first historical substream in the at least one substream corresponding to the coding unit. "Corresponding" herein may mean that a substream segment corresponding to the first substream and a substream segment corresponding to the first historical substream are stored in one encoding substream buffer (as shown in FIG. 3, the substream segment corresponding to the substream 1 is stored in the encoding substream buffer 1), or the first substream and the first historical substream correspond to a same entropy encoder, or the like.

The historical coding unit herein is a coding unit corresponding to another substream that is encoded by the encoding device through the entropy encoder corresponding to the first substream before S310.

In a possible example, the historical coding unit and the coding unit in S310 may be different coding units for different image sub-regions of a same frame of image.

In another possible example, the historical coding unit and the coding unit in S310 may alternatively be different image sub-regions that are in a plurality of frames of images and that correspond to a same object, and images to which the different image sub-regions belong are the same or different.

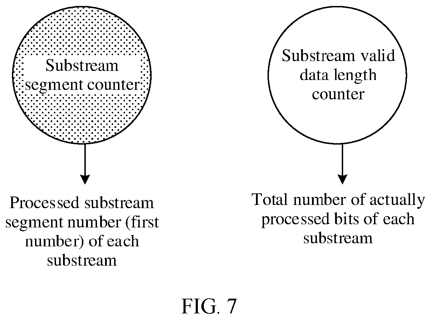

For example, two counters may be deployed in the encoding device: a substream segment counter and a substream valid data length counter. FIG. 7 is a diagram of the two counters according to an embodiment of this application. The substream segment counter records a processed substream segment number (SubstreamSegmentNum) corresponding to each substream. SubstreamSegmentNum is an array whose length is K, K represents a number of substreams, and SubstreamSegmentNum[i] represents a number of substream segments currently processed by an i^{th} substream.

As shown in FIG. 7, the substream valid data length counter records a total number of actually coded bits (SubstreamBits) corresponding to each substream. SubstreamBits is an array whose length is K, K represents a number of substreams, and SubstreamBits[i] represents a total number of actually encoded (or decoded) bits of the i^{th} substream.

Before the encoding device encodes (or decodes) an image or a slice (or a corresponding bit stream), the encoding device initializes values of SubstreamSegmentNum[i] and SubstreamBits[i] to 0.

For the content in S521, the encoding device refreshes a value corresponding to SubstreamBits[0] based on the number of coded bits of the first historical substream in the historical coding unit, and records SubstreamBits[0] as the first number. That is, the encoding device determines that a number of substream segments before the substream 1 corresponding to the coding unit is encoded is SubstreamBits[0], or the encoding device records bitsRecordSubstream[0]=SubstreamBits[0].

Correspondingly, the encoding device further initializes the number of estimated bits. For example, the encoding device records a total value of the header bits headerBitsᵢₙᵢₜᵢₐₗ=0.

S522: The encoding device obtains a second number based on a number of coded bits of the substream 1.

The second number indicates a second number of encoded substream segments corresponding to the substream 1.

For example, the second number recorded by the encoding device is a number of temporary substream segments (tmpSubstreamSegmentNum): tmpSubstreamSegmentNum=(SubstreamBits[ssIdx]+M-N-1)/(M-N), where SubstreamBits[ssIdx] is a number of substream segments corresponding to the substream 1, M is a length of a single substream segment, and N is a length of a header bit in the single substream segment. As shown in a format of the substream segment 1 in FIG. 5, the substream segment 1 includes a data subject and N-bit substream header information (header information for short). A total number of bits of the data subject and the substream header information is M. In some optional implementations, N bits are also referred to as a substream index length of a substream segment.

It should be noted that the first number indicates only a number of substream segments corresponding to a historical substream, and the second number not only includes a number of substream segments corresponding to the historical substream, but also includes a number of substream segments corresponding to the coding unit(or referred to as a current coding unit).

S523: The encoding device obtains a difference between the second number and the first number.

For example, the encoding device records the difference as: AddNum=SubstreamSegmentNum[ssIdx]-tmpSubstreamSegmentNum, where SubstreamSegmentNum[ssIdx] is the number (the first number) of substream segments before the substream segment corresponding to the substream 1 is encoded, and tmpSubstream SegmentNum is the number (the second number) of substream segments after the substream segment corresponding to the substream 1 is encoded.

A physical meaning represented by the difference is a number of substream segments corresponding to the substream 1.

S524: The encoding device updates a substream header bit number of the substream 1 based on the difference recorded in S523 and a substream index length of the substream segment corresponding to the substream 1.

For example, the encoding device records the substream header bit number headerBits=headerBits_{before}+AddNum*N, where headerBits_{before} is a number of substream header bits before the substream segment corresponding to the substream 1 is encoded. If the encoding device does not encode another historical substream before encoding the substream segment corresponding to the substream 1, headerBits_{before}=headerBitsᵢₙᵢₜᵢₐₗ=0; or if the encoding device has encoded another historical substream before encoding the substream segment corresponding to the substream 1, headerBits_{before} is a sum of the substream header bit number of the encoded substream segment.

In this embodiment, the encoding device determines, based on the number of coded bits of the first historical substream in the historical coding unit, the first number of substream segments before the first substream is encoded, to update the number of substream header bits included in the first substream. This helps avoid a problem that the number of substream header bits is incorrectly estimated, improve accuracy of the first number of bits, improve accuracy of QP decision based on the first number of bits, and improve quality of video coding based on the QP value obtained through decision.

In a possible example, the encoding device includes at least one encoding substream buffer. The at least one encoding substream buffer includes a first buffer (for example, the encoding substream buffer 1 in FIG. 3). The first buffer is configured to temporarily store the substream segment corresponding to the first historical substream and the substream segment corresponding to the first substream (the substream 1).

In some feasible cases, a number of encoding substream buffers included in the encoding device is consistent with a number of entropy encoders included in the encoding device, and one encoding substream buffer is configured to temporarily store a substream segment that needs to be processed by one entropy encoder. For example, data content stored in one encoding substream buffer is a substream segment data subject included in a substream segment.

For example, the encoding device divides the coding unit into a plurality of substreams, and sends different substreams to different encoding substream buffers based on substream index values in substream segments corresponding to the substreams. For example, a substream index length of each substream segment is 2 bits (for example, 2 binary bits). A substream index value '00' represents that a current substream segment belongs to the first substream, a value '01' represents that the current substream segment belongs to the second substream, and a value '10' represents that the current substream segment belongs to the third substream. A value of SubstreamIndex is equal to a value of substream_index converted to a 2-bit unsigned integer. The value of SubstreamIndex cannot be 3. If image_format is set to '000', the value of SubstreamIndex cannot be 1, 2, or 3.

In an optional implementation, the encoding device further updates, based on the second number, a number of substream segments stored in the first buffer. For example, the number of encoded substream segments in the first buffer is updated to the subsequent second number. For example, the encoding device sets: SubstreamSegmentNum[ssIdx]=tmpSubstreamSegmentNum.

In this embodiment, each time the encoding device updates the number of substream header bits, the encoding device updates a number of encoded data packets in the encoding substream buffer. Therefore, in a process in which the encoding device encodes an undecoded substream segment in the encoding substream buffer, the encoding device updates substream header bits corresponding to the substream. This improves accuracy of the first number of bits required for QP decision, and helps improve video coding quality.

S530: The encoding device determines the number of estimated bits based on at least one substream header bit number corresponding to the at least one substream.

Optionally, when the substream segment does not include a flag bit, the number of estimated bits may be a sum of all substream header bit numbers corresponding to the at least one substream. When the substream segment corresponding to the substream includes data subject content and a substream header bit corresponding to the substream, the number of coded bits indicates the data content, and the number of estimated bits indicates the substream header bit (substream index). Therefore, a problem that a QP value is excessively small because the substream header bits are not considered by the rate control module is avoided, and a bit rate of video coding and image quality corresponding to video content in the bitstream are improved.

S540: The encoding device obtains the first number of bits based on the number of coded bits and the number of estimated bits.

In this embodiment, the encoding device separately obtains the number of coded bits and the number of estimated bits in the first number of bits. The number of estimated bits does not merely indicate a substream header bit corresponding to a substream, and substream header bits of all substreams corresponding to the coding unit are considered. This further avoids a problem that the QP value is excessively small because the substream header bits are not considered by the code rate control module, and helps improve a bit rate of video coding and improve image quality corresponding to video content in the bitstream.

Correspondingly, in the image decoding method, the decoding device first obtains at least one substream of the coding unit based on the bitstream, estimates the first number of bits of the at least one substream, performs QP decision on the coding unit based on the first number of bits, and performs dequantization and prediction based on QP value obtained through decision to output a reconstructed image corresponding to the coding unit.

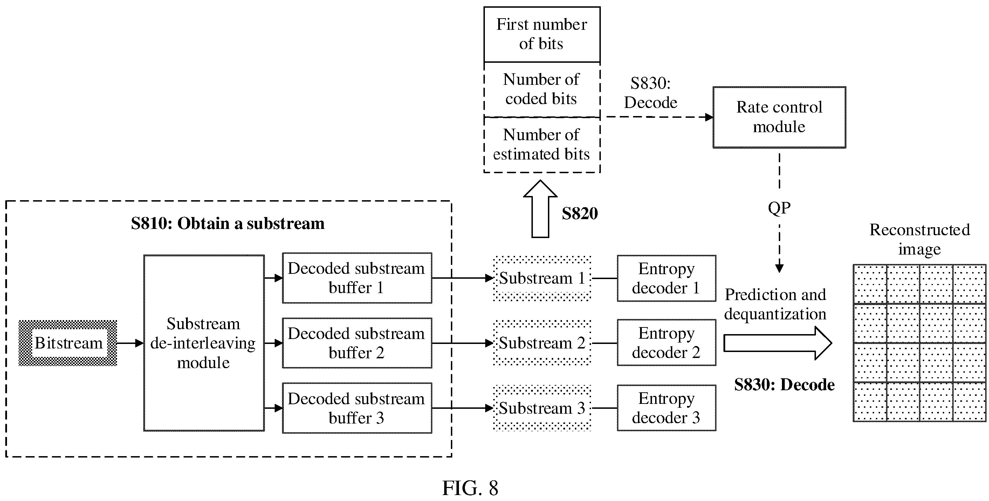

Based on the decoding device 220 shown in FIG. 2, this application further provides an image decoding method, as shown in FIG. 8. FIG. 8 is a schematic flowchart of an image decoding method according to an embodiment of this application. The decoding method may be performed by the decoding device 220, or may be performed by a decoding side that supports a function of the decoding device 220. Herein, an example in which the decoding device 220 implements the decoding method is used for description. The decoding method includes the following steps S810 to S830.

S810: The decoding device obtains, based on a bitstream, at least one substream corresponding to a coding unit.

For example, the bitstream herein may be a bitstream output in the embodiment corresponding to the foregoing encoding method.

S820: The decoding device performs entropy decoding on the at least one substream to obtain a first number of bits.

The first number of bits includes a number of coded bits and a number of estimated bits. The number of coded bits indicates a number of bits occupied by data subject content included in the at least one substream, and the number of estimated bits indicates a substream header bit of each substream in the at least one substream.

For a specific implementation in which the decoding device obtains the number of coded bits, the number of estimated bits, and the first number of bits, for corresponding examples and beneficial effect, refer to corresponding descriptions in the foregoing encoding method embodiment. Details are not described herein again.

Differences between a decoding side and an encoding side are as follows: 1. A substream buffer included in the decoding device is a decoding substream buffer. 2. The decoding device can obtain a plurality of substreams only after performing de-interleaving (or referred to as substream reassembly) on the bitstream.

S830: The decoding device decodes the at least one substream based on the first number of bits to output a reconstructed image of the coding unit.

In this embodiment, the decoding device may decode the coding unit based on the number of coded bits corresponding to the coding unit and the number of estimated bits indicating substream header bits corresponding to a plurality of substreams. This avoids a problem that accuracy of rate control is affected because an error occurs when a rate control module performs rate control based on only the number of coded bits corresponding to the coding unit, and helps improve video decoding quality.

In addition, because the decoding device considers a number of bits occupied by the substream header bits, the substream header bits are also considered in a video decoding process. This avoids a problem that a QP value is excessively small because the substream header bits are not considered by the rate control module, and helps improve image quality of video content obtained by parsing the bitstream by the decoding device.

In an optional implementation, that the decoding device outputs a reconstructed image of the coding unit may include: The decoding device displays the reconstructed image. For example, the decoding device 220 in FIG. 2 includes the display device 221. The display device 221 may be configured to display the reconstructed image.

In this embodiment, the decoding device may display one or more frames of images, to view image information carried in the bitstream. This facilitates display of the video content and the like.

It should be noted that, according to the encoding method and the decoding method provided in embodiments of this application, the substream header bits are estimated based on bits actually consumed by an encoding device and the decoding device, and a substream interleaving module and a substream de-interleaving module are not depended on. The rate control module and the substream interleaving module are decoupled on an encoding device side, and the rate control module and the substream de-interleaving module are decoupled on a decoding device side. This helps reduce video coding complexity and improve video coding accuracy.

It may be understood that, to implement functions in the foregoing embodiments, the encoding device and the decoding device include corresponding hardware structures and/or software modules for performing the functions. A person skilled in the art should be easily aware that, in this application, units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

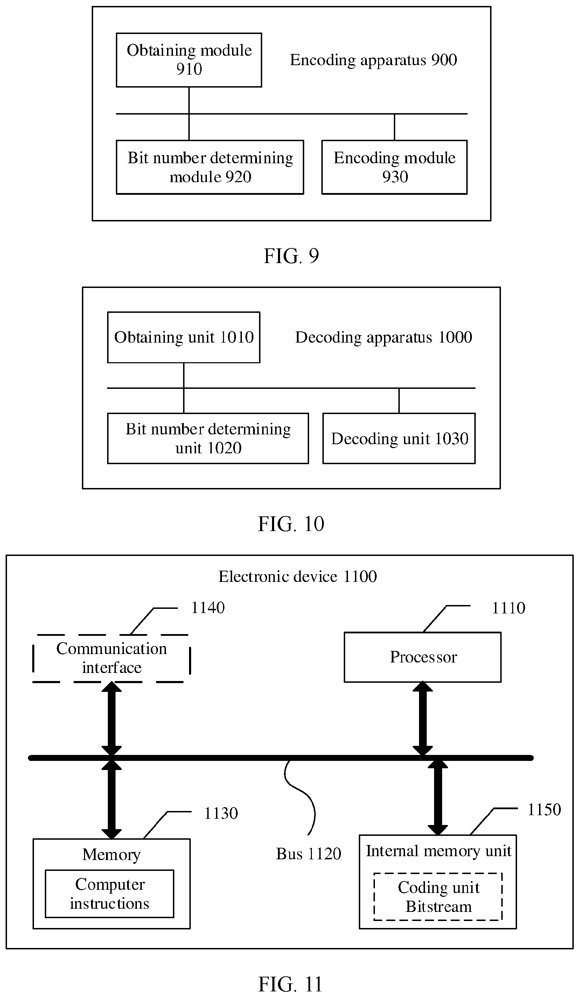

FIG. 9 is a diagram of a structure of an encoding apparatus according to an embodiment of this application. The encoding apparatus may be configured to implement a function of the encoding device in the foregoing method embodiments, and therefore can also implement beneficial effect of the foregoing encoding method embodiments. In this embodiment of this application, the encoding apparatus may be the terminal device 112 shown in FIG. 1, or may be the encoding device 210 shown in FIG. 2, or may be a module (for example, a chip) used in an encoding device.

As shown in FIG. 9, the encoding apparatus 900 includes an obtaining module 910, a bit number determining module 920, and an encoding module 930. The obtaining module 910 is configured to obtain at least one substream of a coding unit of a to-be-encoded image. The bit number determining module 920 is configured to perform entropy encoding on the at least one substream to obtain a first number of bits. The first number of bits includes a number of coded bits and a number of estimated bits. The number of coded bits indicates a number of bits occupied by data subject content included in the at least one substream, and the number of estimated bits indicates a substream header bit of each substream in the at least one substream. The encoding module 930 is configured to encode the at least one substream based on the first number of bits to output a bitstream of the coding unit.

**In** an optional implementation, the bit number determining module 920 is specifically configured to: perform entropy encoding on the at least one substream to obtain the number of coded bits; for a substream segment corresponding to each substream in the at least one substream, estimate a substream header bit number of each substream, and determine the number of estimated bits based on at least one substream header bit number corresponding to the at least one substream; and obtain the first number of bits based on the number of coded bits and the number of estimated bits.

In an optional implementation, the bit number determining module 920 is specifically configured to: obtain, based on a number of coded bits of a first historical substream in a historical coding unit, a first number of substream segments before a first substream is encoded, where the first substream is a substream corresponding to the first historical substream in the at least one substream; and update a substream header bit number of the first substream based on the first number and a substream index length of a substream segment corresponding to the first substream.

In an optional implementation, the bit number determining module 920 is specifically configured to: obtain a second number based on a number of coded bits of the first substream, and obtain a difference between the second number and the first number; and update the substream header bit number of the first substream based on the difference and the substream index length of the substream segment corresponding to the first substream. The second number indicates a second number of encoded substream segments corresponding to the first substream.

In an optional implementation, the encoding device includes at least one encoding substream buffer. The at least one encoding substream buffer includes a first buffer, and the first buffer is configured to temporarily store a substream segment corresponding to the first historical substream and the substream segment corresponding to the first substream.

Optionally, the encoding apparatus provided in this embodiment of this application further includes an updating module, configured to update, based on the second number, a number of substream segments stored in the first buffer.

In an optional implementation, the substream segment corresponding to each substream includes a substream segment data subject and a substream index of each substream.

In an optional implementation, the number of estimated bits is a sum of at least one substream header bit number.

In an optional implementation, a substream segment corresponding to each substream in the at least one substream further includes a preset flag bit, and the number of estimated bits further indicates the flag bit.

In an optional implementation, the encoding module 930 is specifically configured to: determine a QP value of the coding unit based on the first number of bits; and encode the at least one substream based on the QP value to output the bitstream of the coding unit.

In an optional implementation, the encoding module 930 is specifically configured to send the bitstream of the coding unit.

The encoding apparatus 900 may be configured to implement operation steps corresponding to the methods in the foregoing encoding method embodiments, and therefore can also implement corresponding beneficial effect. Details are not described herein again. For more content of the obtaining module 910, the bit number determining module 920, and the encoding module 930, refer to the content of the foregoing encoding method embodiment. Details are not described herein again.

Correspondingly, an embodiment of this application further provides a decoding apparatus, as shown in FIG. 10. FIG. 10 is a diagram of a structure of a decoding apparatus according to an embodiment of this application. The decoding apparatus may be configured to implement a function of the decoding device in the foregoing method embodiment, and therefore can also implement beneficial effect of the foregoing decoding method embodiment. In this embodiment of this application, the decoding apparatus may be any one of the terminal device 113 to the terminal device 115 shown in FIG. 1, or may be the decoding device 220 shown in FIG. 2, or may be a module (for example, a chip) used in a decoding device.

As shown in FIG. 10, the decoding apparatus 1000 includes an obtaining unit 1010, a bit number determining unit 1020, and a decoding unit 1030. The obtaining unit 1010 is configured to obtain, based on a bitstream, at least one substream corresponding to a coding unit. The bit number determining unit 1020 is configured to perform entropy decoding on the at least one substream to obtain a first number of bits. The first number of bits includes a number of coded bits and a number of estimated bits. The number of coded bits indicates a number of bits occupied by data subject content included in the at least one substream, and the number of estimated bits indicates a substream header bit of each substream in the at least one substream. The decoding unit 1030 is configured to decode the at least one substream based on the first number of bits to output a reconstructed image of the coding unit.

In an optional implementation, the bit number determining unit 1020 is specifically configured to: perform entropy decoding on the at least one substream to obtain the number of coded bits; and for a substream segment corresponding to each substream in the at least one substream, estimate a substream header bit number of each substream, and determine the number of estimated bits based on at least one substream header bit number corresponding to the at least one substream. In addition, the bit number determining unit 1020 is further specifically configured to obtain the first number of bits based on the number of coded bits and the number of estimated bits.

In an optional implementation, the bit number determining unit 1020 is specifically configured to: obtain, based on a number of coded bits of a first historical substream in a historical coding unit, a first number of substream segments before a first substream is decoded; and update a substream header bit number of the first substream based on the first number and a substream index length of a substream segment corresponding to the first substream. The first substream is a substream corresponding to the first historical substream in the at least one substream.

In an optional implementation, the bit number determining unit 1020 is specifically configured to: obtain a second number based on a number of coded bits of the first substream, and obtain a difference between the second number and the first number. The second number indicates a second number of undecoded substream segments corresponding to the first substream. In addition, the bit number determining unit 1020 is further specifically configured to update the substream header bit number of the first substream based on the difference and the substream index length of the substream segment corresponding to the first substream.

In an optional implementation, the decoding device includes at least one decoding substream buffer. The at least one decoding substream buffer includes a first buffer, and the first buffer is configured to temporarily store a substream segment corresponding to the first historical substream and the substream segment corresponding to the first substream.

Optionally, the decoding apparatus provided in this embodiment of this application further includes an updating unit, configured to update, based on the second number, a number of substream segments stored in the first buffer.

In an optional implementation, the substream segment corresponding to each substream includes a substream segment data subject and a substream index of each substream.

In an optional implementation, the number of estimated bits is a sum of at least one substream header bit number.

In an optional implementation, a substream segment corresponding to each substream in the at least one substream further includes a preset flag bit, and the number of estimated bits further indicates the flag bit.

In an optional implementation, the coding unit is specifically configured to: determine a QP value of the coding unit based on the first number of bits, and decode the at least one substream based on the QP value to output the reconstructed image corresponding to the coding unit.

In an optional implementation, the decoding apparatus may include a display unit, and the display unit is configured to display the reconstructed image corresponding to the coding unit.

The decoding apparatus 1000 may be configured to implement operation steps corresponding to the methods in the foregoing decoding method embodiments, and therefore can also implement corresponding beneficial effect. Details are not described herein again. For more content of the obtaining unit 1010, the bit number determining unit 1020, and the decoding unit 1030, refer to the content of the foregoing encoding method embodiment. Details are not described herein again.

When the encoding apparatus or the decoding apparatus implements, by using software, the method shown in any one of the foregoing accompanying drawings, the encoding apparatus or the decoding apparatus and units thereof may also be software modules. A processor invokes the software module to implement the foregoing method. The processor may be a central processing unit (Central Processing unit, CPU), another application-specific integrated circuit (Application Specific Integrated Circuit, ASIC), or a programmable logic device (programmable logic device, PLD). The PLD may be a complex programmable logic device (complex programmable logic device, CPLD), a field programmable gate array (field programmable gate array, FPGA), a generic array logic (generic array logic, GAL), or any combination thereof.

For more detailed descriptions of the encoding apparatus or the decoding apparatus, refer to related descriptions in embodiments shown in the foregoing accompanying drawings. Details are not described herein again. It may be understood that the encoding apparatus or the decoding apparatus shown in the foregoing accompanying drawings is merely an example provided in this embodiment. The encoding apparatus or the decoding apparatus may include more or fewer units. This is not limited in this application.

When the encoding apparatus or the decoding apparatus is implemented by using hardware, the hardware may be implemented by using a processor or a chip. The chip includes an interface circuit and a control circuit. The interface circuit is configured to: receive data from a device other than the processor and transmit the data to the control circuit, or send data from the control circuit to a device other than the processor.

The control circuit and the interface circuit are configured to implement the method in any possible implementation in the foregoing embodiments through a logic circuit or by executing code instructions. For beneficial effect, refer to the descriptions of any aspect of foregoing embodiments. Details are not described herein again.

In addition, the encoding apparatus or the decoding apparatus may alternatively be implemented via an electronic device. The electronic device herein may be the encoding device or the decoding device in the foregoing embodiments. Alternatively, when the electronic device is a chip or a chip system used in a server, the encoding apparatus or the decoding apparatus may alternatively be implemented by using a chip or a chip system.

FIG. 11 is a diagram of a structure of an electronic device according to an embodiment of this application. The electronic device 1100 includes a processor 1110, a bus 1120, a memory 1130, an internal memory unit 1150 (which may also be referred to as a main memory (main memory) unit), and a communication interface 1140. The processor 1110, the memory 1130, the internal memory unit 1150, and the communication interface 1140 are connected through the bus 1120.

It should be understood that, in this embodiment, the processor 1110 may be a CPU, or the processor 1110 may be another general-purpose processor, a DSP, an ASIC, an FPGA or another programmable logic device, a discrete gate or a transistor logic device, a discrete hardware component, or the like. The general-purpose processor may be a microprocessor or any conventional processor or the like.

The communication interface 1140 is configured to implement communication between the electronic device 1100 and an external device or component. In this embodiment, the communication interface 1140 is configured to exchange data with another electronic device.

The bus 1120 may include a path, configured to transfer information between the foregoing components (such as the processor 1110, the internal memory unit 1150, and the memory 1130). In addition to a data bus, the bus 1120 may further include a power bus, a control bus, a status signal bus, and the like. However, for clear descriptions, various types of buses in the figures are marked as the bus 1120. The bus 1120 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) bus, or the like.

In an example, the electronic device 1100 may include a plurality of processors. The processor may be a multi-CPU (multi-CPU) processor. The processor herein may be one or more devices, circuits, and/or computing units configured to process data (for example, computer program instructions). The processor 1110 may invoke a coding unit stored in the internal memory unit 1150, to perform encoding based on the coding unit; or the processor 1110 may invoke a bitstream stored in the internal memory unit 1150, to perform decoding based on the bitstream, or the like.

It should be noted that in FIG. 11, that the electronic device 1100 includes only one processor 1110 and one memory 1130 is used as an example. Herein, the processor 1110 and the memory 1130 are respectively configured to indicate a type of component or device. In a specific embodiment, a number of components or devices of each type can be determined based on service requirements.

The internal memory unit 1150 may correspond to a storage medium configured to store information like the coding unit and the bitstream in the foregoing method embodiment. The internal memory unit 1150 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1130 is configured to store the bitstream, a to-be-encoded coding unit, or the like, and may be a solid state disk or a mechanical hard disk.

It should be understood that the electronic device 1100 may be a DPU. The electronic device 1100 according to this embodiment may correspond to the encoding apparatus or the decoding apparatus in this embodiment, and may correspond to a corresponding subject in FIG. 2. In addition, the foregoing and other operations and/or functions of each module in the encoding apparatus or the decoding apparatus are respectively used to implement corresponding procedures in the foregoing method embodiments. For brevity, details are not described herein again.

The method steps in embodiments may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, the storage medium is coupled to the processor, so that the processor can read information from the storage medium and write information into the storage medium. Certainly, the storage medium may be a component of the processor. The processor and the storage medium may be disposed in the ASIC. In addition, the ASIC may be located in a computing device. Certainly, the processor and the storage medium may alternatively exist as discrete components in a network device or a terminal device.

This application further provides a chip system. The chip system includes a processor, configured to implement a function of a data processing unit in the foregoing method. In a possible design, the chip system further includes a memory, configured to store program instructions and/or data. The chip system may include a chip, or may include a chip and another discrete component.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD). The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A decoding method, wherein the method is performed by a decoding device, and the method comprises:
obtaining, based on a bitstream, at least one substream corresponding to a coding unit;
performing entropy decoding on the at least one substream to obtain a first number of bits, wherein the first number of bits comprises a number of coded bits and a number of estimated bits, the number of coded bits indicates a number of bits occupied by data subject content comprised in the at least one substream, and the number of estimated bits indicates a substream header bit of each substream in the at least one substream; and
decoding the at least one substream based on the first number of bits to output a reconstructed image of the coding unit.

2. The method according to claim 1, wherein
the performing entropy decoding on the at least one substream to obtain a first number of bits comprises:
performing entropy decoding on the at least one substream to obtain the number of coded bits;
for a substream segment corresponding to each substream in the at least one substream, estimating a substream header bit number of each substream;
determining the number of estimated bits based on at least one substream header bit number corresponding to the at least one substream; and
obtaining the first number of bits based on the number of coded bits and the number of estimated bits.

3. The method according to claim 2, wherein
the estimating a substream header bit number of each substream comprises:
obtaining, based on a number of coded bits of a first historical substream in a historical coding unit, a first number of substream segments before a first substream is decoded, wherein the first substream is a substream corresponding to the first historical substream in the at least one substream; and
updating a substream header bit number of the first substream based on the first number and a substream index length of a substream segment corresponding to the first substream.

4. The method according to claim 3, wherein
the updating a substream header bit number of the first substream based on the first number and a substream index length of a substream segment corresponding to the first substream comprises:
obtaining a second number based on a number of coded bits of the first substream, wherein the second number indicates a second number of undecoded substream segments corresponding to the first substream;
obtaining a difference between the second number and the first number; and
updating the substream header bit number of the first substream based on the difference and the substream index length of the substream segment corresponding to the first substream.

5. The method according to claim 4, wherein the decoding device comprises at least one decoding substream buffer, the at least one decoding substream buffer comprises a first buffer, and the first buffer is configured to temporarily store a substream segment corresponding to the first historical substream and the substream segment corresponding to the first substream; and
the method further comprises:
updating, based on the second number, a number of substream segments stored in the first buffer.

6. The method according to any one of claims 2 to 5, wherein the substream segment corresponding to each substream comprises a substream segment data subject and a substream index of the substream.

7. The method according to any one of claims 1 to 6, wherein the number of estimated bits is a sum of the at least one substream header bit number.

8. The method according to any one of claims 1 to 6, wherein the substream segment corresponding to each substream in the at least one substream further comprises a preset flag bit, and the number of estimated bits further indicates the flag bit.

9. The method according to any one of claims 1 to 8, wherein the decoding the at least one substream based on the first number of bits to output a reconstructed image of the coding unit comprises:
determining a quantization parameter QP value of the coding unit based on the first number of bits; and
decoding the at least one substream based on the QP value to output the reconstructed image corresponding to the coding unit.

10. The method according to any one of claims 1 to 9, wherein the outputting the reconstructed image corresponding to the coding unit comprises:
displaying the reconstructed image corresponding to the coding unit.

11. An encoding method, wherein the method is performed by an encoding device, and the method comprises:
obtaining at least one substream of a coding unit of a to-be-encoded image;
performing entropy encoding on the at least one substream to obtain a first number of bits, wherein the first number of bits comprises a number of coded bits and a number of estimated bits, the number of coded bits indicates a number of bits occupied by data subject content comprised in the at least one substream, and the number of estimated bits indicates a substream header bit of each substream in the at least one substream; and
encoding the at least one substream based on the first number of bits to output a bitstream of the coding unit.

12. The method according to claim 11, wherein
the performing entropy encoding on the at least one substream to obtain a first number of bits comprises:
performing entropy encoding on the at least one substream to obtain the number of coded bits;
for a substream segment corresponding to each substream in the at least one substream, estimating a substream header bit number of each substream;
determining the number of estimated bits based on at least one substream header bit number corresponding to the at least one substream; and
obtaining the first number of bits based on the number of coded bits and the number of estimated bits.

13. The method according to claim 12, wherein
the estimating a substream header bit number of each substream comprises:
obtaining, based on a number of coded bits of a first historical substream in a historical coding unit, a first number of substream segments before a first substream is encoded, wherein the first substream is a substream corresponding to the first historical substream in the at least one substream; and
updating a substream header bit number of the first substream based on the first number and a substream index length of a substream segment corresponding to the first substream.

14. The method according to claim 13, wherein
the updating a substream header bit number of the first substream based on the first number and a substream index length of a substream segment corresponding to the first substream comprises:
obtaining a second number based on a number of coded bits of the first substream, wherein the second number indicates a second number of encoded substream segments corresponding to the first substream;
obtaining a difference between the second number and the first number; and
updating the substream header bit number of the first substream based on the difference and the substream index length of the substream segment corresponding to the first substream.

15. The method according to claim 14, wherein the encoding device comprises at least one encoding substream buffer, the at least one encoding substream buffer comprises a first buffer, and the first buffer is configured to temporarily store a substream segment corresponding to the first historical substream and the substream segment corresponding to the first substream; and
the method further comprises:
updating, based on the second number, a number of substream segments stored in the first buffer.

16. The method according to any one of claims 12 to 15, wherein the substream segment corresponding to each substream comprises a substream segment data subject and a substream index of the substream.

17. The method according to any one of claims 11 to 16, wherein the number of estimated bits is a sum of the at least one substream header bit number.

18. The method according to any one of claims 11 to 16, wherein the substream segment corresponding to each substream in the at least one substream further comprises a preset flag bit, and the number of estimated bits further indicates the flag bit.

19. The method according to any one of claims 11 to 18, wherein the encoding the at least one substream based on the first number of bits to output a bitstream of the coding unit comprises:
determining a quantization parameter QP value of the coding unit based on the first number of bits; and
encoding the at least one substream based on the QP value to output the bitstream of the coding unit.

20. The method according to any one of claims 11 to 19, wherein the outputting the bitstream of the coding unit comprises:
sending the bitstream of the coding unit.

21. A decoding apparatus, comprising:
an obtaining unit, configured to obtain, based on a bitstream, at least one substream corresponding to a coding unit;
a bit number determining unit, configured to perform entropy decoding on the at least one substream to obtain a first number of bits, wherein the first number of bits comprises a number of coded bits and a number of estimated bits, the number of coded bits indicates a number of bits occupied by data subject content comprised in the at least one substream, and the number of estimated bits indicates a substream header bit of each substream in the at least one substream; and
a decoding unit, configured to decode the at least one substream based on the first number of bits to output a reconstructed image of the coding unit.

22. An encoding apparatus, comprising:
an obtaining module, configured to obtain at least one substream of a coding unit of a to-be-encoded image;
a bit number determining module, configured to perform entropy encoding on the at least one substream to obtain a first number of bits, wherein the first number of bits comprises a number of coded bits and a number of estimated bits, the number of coded bits indicates a number of bits occupied by data subject content comprised in the at least one substream, and the number of estimated bits indicates a substream header bit of each substream in the at least one substream; and
an encoding module, configured to encode the at least one substream based on the first number of bits to output a bitstream of the coding unit.

23. An electronic device, comprising a processor and an interface circuit, wherein
the interface circuit is configured to receive a signal from a device other than the electronic device and transmit the signal to the processor, or send a signal from the processor to a device other than the electronic device; and
the processor is configured to implement the method according to any one of claims 1 to 10 through a logic circuit or by executing code instructions, or the processor is configured to implement the method according to any one of claims 11 to 20 through a logic circuit or by executing code instructions.

24. A coding system, comprising an encoding device and a decoding device, wherein the encoding device is communicatively connected to the decoding device, the decoding device is configured to implement the method according to any one of claims 1 to 10, and the encoding device is configured to implement the method according to any one of claims 11 to 20.

25. A computer-readable storage medium, wherein the storage medium stores a computer program or instructions, and when the computer program or the instructions are executed by an electronic device, the method according to any one of claims 1 to 10 is implemented; and/or
when the computer program or the instructions are executed by the electronic device, the method according to any one of claims 11 to 20 is implemented.

26. A computer program product, wherein the computer program product comprises instructions; and
when the computer program product runs on an encoding device, the encoding device executes the instructions to implement the method according to any one of claims 11 to 20; and/or
when the computer program product runs on a decoding device, the decoding device executes the instructions to implement the method according to any one of claims 1 to 10.
